# EUROPEAN PATENT APPLICATION

(11) **EP 2 607 311 A1**
(43) Date of publication of application: **26.06.2013**
(21) Application number: 11818154.4
(22) Date of filing: 12.08.2011
(51) Int. Cl.: C01B 33/027

(54) **METHOD FOR PRODUCING SILICON MICROPARTICLES**

(30) Priority: 19.08.2010 JP 2010183768
(71) Applicant: Bridgestone Corporation, Tokyo 104-8340 (JP)
(72) Inventor: SATO, Seiichi, Hyogo (JP); MIYANO, Mari, Tokyo 187-8531 (JP); ENDO, Shigeki, Tokyo 187-8531 (JP); SHIINO, Osamu, Tokyo 187-8531 (JP); ONO, Shingo, Tokyo 187-8531 (JP); YOSHIKAWA, Masato, Tokyo 187-8531 (JP)
(74) Representative: Lamb, Martin John Carstairs
(86) International application number: PCT/JP2011/068436
(87) International publication number: WO 2012/023512

(57) **Abstract**

A method for producing silicon microparticles comprises: a burning step for burning a mixture including a silicon source and a carbon source in an inert atmosphere; a rapid cooling step for rapidly cooling gas generated by burning the mixture, and for obtaining a composite powder including silicon microparticles and silicon oxide; a heating step for heating the composite powder in an oxidative atmosphere; and a removal step for removing silicon monoxide and silicon dioxide from the heated composite powder.

## Description

### TECHNICAL FIELD

The present invention relates to a method for producing silicon fine particles.

### BACKGROUND ART

Conventionally, as a simple method for producing silicon fine particles, a method is known by which silicon fine particles are produced from a composite powder including silicon fine particles (Si) and silicon oxide (SiOx, X=1 or 2) (see, for example, Patent Document 1). The composite powder is obtained by baking a mixture including a silicon source and a carbon source in an inert atmosphere, followed by rapid cooling of a gas generated by the baking. The composite powder thus obtained is immersed in a solution containing hydrofluoric acid and an oxidizing agent to etch silicon oxide. In this way, the silicon oxide is removed from the composite powder, and silicon fine particles are obtained.

The etching solution etches not only silicon oxide, but also silicon fine particles. Hence, by adjusting the etching time and the etching concentration, silicon fine particles having a desired particle diameter are obtained.

### PRIOR ART DOCUMENT

### PATENT DOCUMENT

Patent Document 1: Japanese Patent Application Publication No. 2007-112656

### SUMMARY OF THE INVENTION

The particle diameters of silicon fine particles included in a composite powder vary a lot, and the silicon fine particles have a wide particle size distribution. Although the particle diameters can be reduced by etching, the particle size distribution does not change. Hence, it is not possible to efficiently obtain silicon fine particles having a uniform particle diameter, because particle diameters of some of silicon fine particles with a wide particle diameter distribution are out of a desired particle diameter.

Moreover, the particle size distribution varies in every production. For this reason, even if etching conditions are found under which desired particle diameters are obtained at a large proportion, the etching conditions are not necessarily optimum for the next production. Hence, it is difficult to perform etching targeted for a group of silicon fine particles having the most uniform particle diameter. Also from this point, silicon fine particles having a uniform particle diameter have yet to be obtained efficiently.

In this respect, the present invention has been made in view of these circumstances, and an object of the present invention is to provide a method for efficiently producing silicon fine particles having a more uniform particle diameter than those achieved in conventional cases.

To solve the above problem, the inventers accomplished the invention having following features as a result of deep studies. A feature of the present invention is summarized as a method for producing silicon fine particles, comprising: a baking step of baking a mixture including a silicon source and a carbon source in an inert atmosphere; a rapid cooling step of rapidly cooling a gas generated by baking the mixture to obtain a composite powder including silicon fine particles and silicon oxide; a heating step of heating the composite powder in an oxidizing atmosphere; and a removing step of removing silicon monoxide and silicon dioxide from the heated composite powder.

According to the feature of the present invention, the composite powder is heated in an oxidizing atmosphere. This results in oxidation of surfaces of silicon fine particles included in the composite powder, and formation of silicon dioxide (SiO₂). Silicon fine particles having smaller particle diameters are more resistant to the formation of silicon dioxide. For this reason, surfaces of silicon fine particles having larger particle diameters are oxidized to silicon dioxide to greater extents, whereas surfaces of silicon fine particles having smaller particle diameters are not oxidized to silicon dioxide so much. Hence, silicon fine particles having a more uniform particle diameter than those achieved in conventional cases can be obtained. As a result, the resultant particle size distribution is narrow, and hence silicon fine particles can be obtained efficiently.

Another feature of the present invention is summarized as that the removing step includes the steps of: disintegrating the composite powder; and centrifuging the disintegrated composite powder. Another feature of the present invention is summarized as that, in the heating step, the heating of the composite powder in the oxidizing atmosphere is conducted after the composite powder is heated in an inert atmosphere.

### BRIEF DESCRIPTION OF DRAWINGS

[Fig. 1] Fig. 1 is a schematic configuration diagram of a production apparatus 1 according to the present embodiment used for producing silicon fine particles.
[Fig. 2] Fig. 2 is a flowchart for explaining a method for producing silicon fine particles according to the present embodiment.

### MODES FOR CARRYING OUT THE INVENTION

An example of a method for producing silicon fine particles according to the present invention will be described with reference to the drawings. Specifically, descriptions are given of (1) Schematic Configuration of Production Apparatus 1, (2) Method for Producing Silicon Fine Particles, (3) Examples, (4) Operations and Effects, and (5) Other embodiments.

In the following description of the drawings, same or similar reference signs denote same or similar elements and portions. It should be noted that the drawings are schematic and ratios of dimensions and the like are different from actual ones. Therefore, specific dimensions and the like should be determined in consideration of the following description. The drawings also include portions having different dimensional relationships and ratios from each other.

### (1) Schematic Configuration of Production Apparatus 1

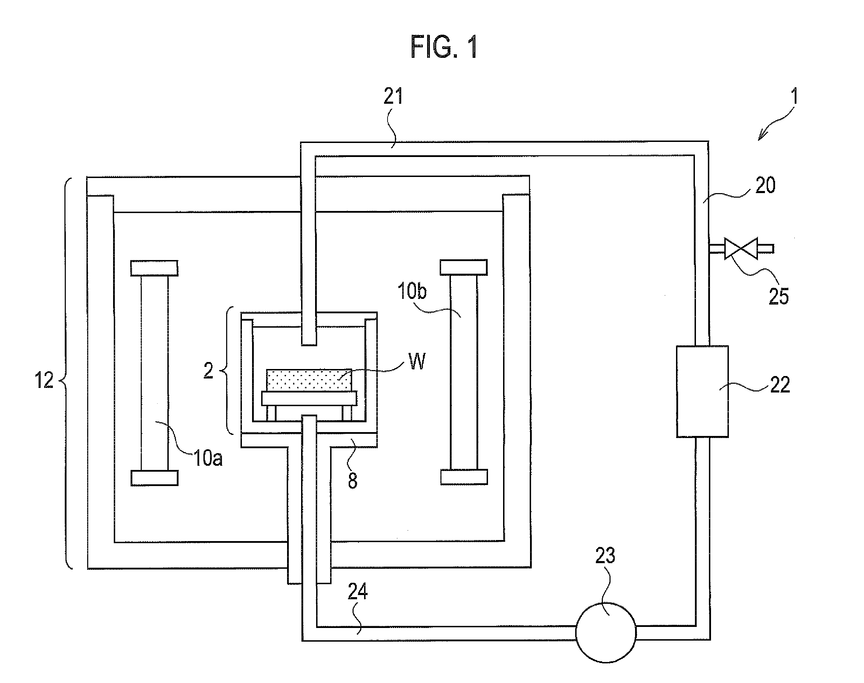

A schematic configuration of a production apparatus 1 according to the present embodiment used for producing silicon fine particles will be described with reference to Fig. 1. Fig. 1 is a schematic configuration diagram of the production apparatus 1 according to the present embodiment used for producing silicon fine particles.

As shown in Fig. 1, the production apparatus 1 includes a heating enclosure 2, a stage 8, a heater 10a, a heater 10b, an insulator 12, an aspirator 20, a dust collector 22, and a blower 23.

In the heating enclosure 2, a mixture including a silicon source and a carbon source is housed in a container W, and a heating atmosphere is formed. The stage 8 supports the heating enclosure 2. The heater 10a and the heater 10b heats the mixture housed in the container W. The insulator 12 covers the heating enclosure 2, the heater 10a, and the heater 10b. The aspirator 20 has a supply pipe 24 for supplying a gas. The aspirator 20 is capable of sucking a SiO gas while maintaining the heating and inert atmosphere in the heating enclosure 2. The aspirator 20 is provided so that an argon gas can circulate therein. The dust collector 22 houses a composite powder. The blower 23 sucks a reaction gas from the heating enclosure 2 through a suction pipe 21. The production apparatus 1 includes an electromagnetic valve 25 which automatically opens or closes depending on a setting pressure.

### (2) Method for Producing Silicon Fine Particles

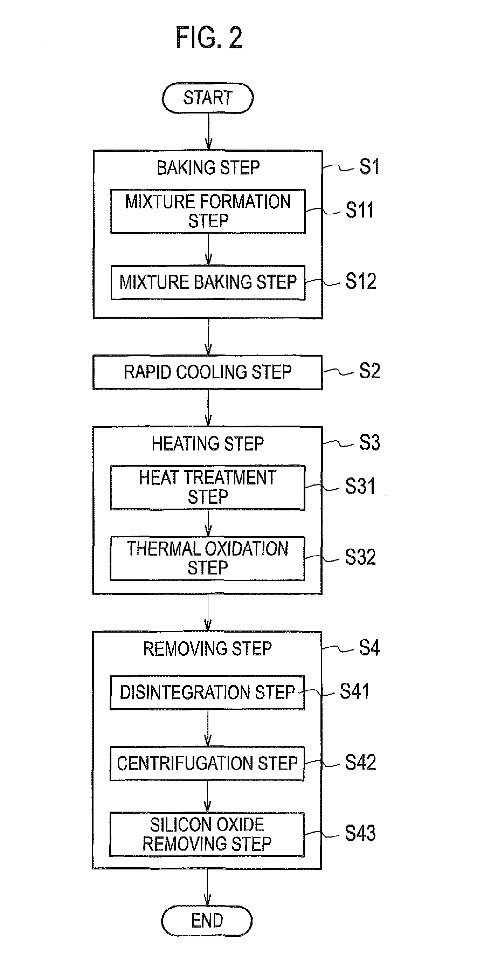

A method for producing silicon fine particles according to the present embodiment will be described with reference to Figs. 1 and 2. Fig. 2 is a flowchart for explaining the method for producing silicon fine particles according to the present embodiment. As shown in Fig. 2, the method for producing silicon fine particles includes Steps S1 to S4.

### (2.1) Baking Step S1

Step S1 is a baking step of baking a mixture including a silicon source and a carbon source in an inert atmosphere. Step S1 includes Step S11 (a mixture formation step) of forming a mixture from a silicon source and a carbon source, and Step S12 (a mixture baking step) of baking the mixture formed in Step S11.

As the silicon source, i.e., a silicon-containing raw material, a liquid silicon source and a solid silicon source can be used together. Note, however, that at least one of the selected silicon sources must be a liquid silicon source.

As the liquid silicon source, polymers of tetraalkoxy silanes and (mono-, di-, tri-, or tetra-) alkoxy silanes are used. Among alkoxy silanes, tetraalkoxy silanes are preferably used. Specific examples thereof include methoxysilanes, ethoxysilanes, propoxysilanes, butoxysilanes, and the like. From the view point of handling, ethoxysilanes are preferable. Examples of the polymers of tetraalkoxy silanes include liquid silicon sources of low-molecular weight polymers (oligomers) having a degree of polymerization of approximately 2 to 15 and silicic acid polymers having a higher degree of polymerization.

Examples of the solid silicon source usable together with these liquid silicon sources include silicon oxides. Examples of the silicon oxides include, besides SiO, silica sols (solutions containing a colloidal ultrafine silica containing OH groups or alkoxyl groups therein), silicon dioxides (silica gel, fine silica, and quartz powder), and the like.

Among these silicon sources, tetraethoxysilane oligomers, mixtures of a tetraethoxysilane oligomer and a fine powder silica, and the like are preferable from the viewpoints of homogeneity and handling.

The carbon source, i.e., a carbon-containing raw material, is synthesized by using a catalyst containing no impurity element, and may be a monomer, oligomer, or polymer composed of any one or more organic compounds curable by heating and/or with a catalyst, or through polymerization or cross-linking with a cross-linking agent.

Preferable specific examples of the carbon-containing raw material include curable resins such as phenolic resins, furan resins, urea resins, epoxy resins, unsaturated polyester resins, polyimide resins, and polyurethane resins synthesized by using a catalyst containing no impurity element. Particularly, resol-type or novolac-type phenolic resins which have a high residual carbon ratio and an excellent workability are preferable.

The resol-type phenolic resins useful in the present embodiment are produced by reacting a monovalent or divalent phenol such as phenol, cresol, xylenol, resorcin, or bisphenol A with an aldehyde such as formaldehyde, acetaldehyde, or benzaldehyde, in the presence of a catalyst containing no impurity element (specifically, ammonia or an organic amine).

The organic amine used as the catalyst may be any of primary, secondary, and tertiary amines. As the organic amine, it is possible to use dimethylamine, trimethylamine, diethylamine, triethylamine, dimethylmonoethanolamine, monomethyldiethanolamine, N-methylaniline, pyridine, morpholine, and the like.

As the method for synthesizing a resol-type phenolic resin by reacting a phenol with an aldehyde in the presence of ammonia or an organic amine, conventionally known methods can be employed, except that a different catalyst is used.

Specifically, 1 to 3 mol of the aldehyde and 0.02 to 0.2 mol of the organic amine or ammonia are added to 1 mol of the phenol, followed by heating at 60 to 100°C.

Meanwhile, the novolac-type phenolic resins useful in the present embodiment can be produced by mixing a monovalent or divalent phenol and an aldehyde described above, and allowing a reaction to proceed therebetween by using, as a catalyst, an acid (specifically, hydrochloric acid, sulfuric acid, p- toluenesulfonic acid, oxalic acid, or the like) containing no impurity element.

For the production of the novolac-type phenolic resin also, conventionally known methods can be employed. Specifically, 0.5 to 0.9 mol of the aldehyde and 0.02 to 0.2 mol of an inorganic acid or an organic acid containing no impurity element are added to 1 mol of the phenol, followed by heating to 60 to 100°C.

Note that examples of the impurity include heavy metal elements such as Fe, Ni, Cu, Cr, V, and W, alkali metal elements such as Li, Na, and K, alkaline earth or amphoteric metal elements such as Be, Mg, Ca, B, Al, and Ga, and the like.

In Step S11, the raw material mixture obtained by mixing the silicon-containing raw material and the carbon-containing raw material is dissolved in a solvent, if necessary, with addition of a catalyst or a cross-linking agent for polymerization or cross-linking thereto. A polymerization or a cross-linking reaction is carried out to form a mixture. The formed mixture is heated at approximately 150°C. Thus, the mixture is dried. The Si/C ratio is preferably 0.5 to 3.0.

Step S12 is a step of baking the mixture obtained in Step S11 in an inert gas atmosphere. The mixture is housed in the container W. The mixture is carbonized and silicified by heating and baking the mixture in an inert gas atmosphere using the heater 10a and the heater 10b. This results in generation of a gas including carbon and silicon. Specifically, silicon monoxide (SiO) is formed as shown in the following formula (1).

SiO₂ + C → SiO + CO formula (1)

The inert gas atmosphere is a non-oxidizing atmosphere. Examples of the inert gas include vacuum, nitrogen, helium, and argon.

### (2.2) Rapid Cooling Step S2

Next, Step S2 is conducted. Step S2 is a rapid cooling step of rapidly cooling the gas generated by baking the mixture to obtain a composite powder. The blower 23 is actuated. Then, the generated gas is drawn from the inside of the heating enclosure 2 by an argon gas stream through the suction pipe 21. Since the outside of the insulator 12 is maintained at room temperature, the generated gas is rapidly cooled to room temperature. Consequently, a composite powder including silicon fine particles (Si) is obtained from the generated gas. Specifically, by cooling at a temperature below 1600°C, a composite powder including silicon fine particles is obtained as shown in the following formula (2).

2SiO → Si + SiO₂ formula (2)

Note that since the reaction in the formula (2) does not proceed completely, the composite powder includes not only Si and SiO₂, but also SiO. In other words, the composite powder includes Si and SiOx (x=1 or 2), aside from impurities.

The obtained composite powder is collected into the dust collector 22. The argon stream is sent to the heating enclosure 2 through the supply pipe 24.

### (2.3) Heating Step S3

Next, Step S3 is conducted. Step S3 is Heating Step S3 of heating the composite powder. As shown in Fig. 2, Step S3 includes Heat Treatment Step S31 of heating the composite powder in an inert atmosphere and Step S32 of heating the composite powder in an acidic atmosphere.

Step S31 is Heat Treatment Step S31 of heating the composite powder in an inert atmosphere. Step S31 is carried out to improve the crystallinity of the silicon fine particles. To obtain the inert atmosphere, for example, a noble gas is used. Step S31 is conducted in a temperature range from 800°C to 1300°C. To obtain a good crystallinity, Step S31 is preferably conducted in a temperature range from 900°C to 1100°C.

Step S32 is a step of heating the composite powder in an acidic atmosphere. Surfaces of the silicon fine particles included in the composite powder are oxidized by heating the composite powder in an acidic atmosphere. Specifically, silicon forming the surfaces of the silicon fine particles is oxidized to silicon dioxide. Here, the surfaces of silicon fine particles having larger particle diameters are oxidized to greater extents than those of silicon fine particles having smaller particle diameters. Hence, in comparison with the ratios of decrease in particle diameters of the silicon fine particles having larger particle diameters due to oxidation, the particle diameters of the silicon fine particles having smaller particle diameters do not decrease so much. Accordingly, silicon fine particles having a uniform particle diameter can be obtained.

Moreover, when the heating temperature is changed, the ratio of the oxidation of the surfaces of the silicon fine particles to silicon dioxide varies. Hence, the particle diameters of the silicon fine particles can be controlled. Specifically, the higher the heating temperature is, the more the oxidation of the surface of the silicon fine particles to silicon dioxide proceeds. Hence, the higher the heating temperature is, the smaller average particle diameter the obtained silicon fine particles have.

Step S31 and Step S32 may be conducted simultaneously. When the heating temperature in Step S32 is equivalent to the temperature for improving the crystallinity, Step S31 can be omitted.

### (2.4) Removing Step S4

Next, Step S4 is conducted. Step S4 is a removing step of removing the silicon oxide from the composite powder. As shown in Fig. 2, Step S4 in the present embodiment include Disintegration Step S41 of disintegrating the composite powder, Centrifugation Step S42 of centrifuging the disintegrated composite powder, and Silicon Oxide Removing Step S43 of removing the silicon oxide from the composite powder obtained by the centrifugation.

Step S41 is Step S41 of disintegrating the composite powder. The composite powder in which the surfaces of the silicon fine particles are oxidized to silicon dioxide in Heating Step S3 is disintegrated. For the disintegration, for example, a ball mill is used. In this step, the composite powder is finely disintegrated.

Step S42 is a step of separating the disintegrated composite powder by centrifugation by centrifugation. Even when the Heating Step S3 is conducted, the particle diameters of all the silicon fine particles cannot be necessarily made uniform, but silicon fine particles may exist which have particle diameters larger than those of the other particles in some cases. Hence, in Step S41, the composite powder is disintegrated into the following composite powders. Specifically, one is a composite powder including silicon fine particles whose particle diameters are made uniform in Heating Step S3 and silicon dioxide formed on the surfaces of the silicon fine particles, and the other is a composite powder including silicon fine particles whose particle diameters are made uniform in Heating Step S3, silicon fine particles having particle diameters slightly larger than the uniform particle diameter, and silicon dioxide formed on the surfaces of the silicon fine particles. By the centrifugation in Step S42, the composite powder including only the silicon fine particles having a uniform particle diameter can be obtained.

Step S43 is a step of removing silicon oxide including silicon dioxide from the composite powder obtained by the centrifugation. For example, the silicon oxide can be removed by etching. The silicon oxide can be removed by immersion in an etching solution containing hydrofluoric acid and an oxidizing agent. Thus, the silicon fine particles are produced.

### (3) Examples

The following experiments were conducted to investigate the average particle diameter and particle size distribution of silicon fine particles according to the present embodiment. Note that the present invention is not limited to these Examples at all.

A mixture solution containing 620 g of ethyl silicate as the silicon source, 288 g of a phenolic resin as the carbon source, and 92 g of an aqueous maleic acid solution (35% by weight) as the polymerization catalyst was placed in the heating enclosure 2 of Fig. 1. The mixture solution was heated at 150°C, and solidified. Next, the obtained mixture was carbonized in a nitrogen atmosphere at 90°C for 1 hour. The obtained carbide was heated in an argon atmosphere at 1600°C.

Next, a reaction gas generated in the heating enclosure 2 was transferred to the outside of the heating enclosure 2 by using the aspirator 20 and an argon gas as a carrier gas, followed by rapid cooling to obtain a composite powder.

The obtained composite powder was heated in an argon atmosphere at 1100°C for 1 hour. After that, the composite powder was heated in an acidic atmosphere (argon: 99% and oxygen: 1%). The heating temperatures were 600°C (Example 1), 700°C (Example 2), 800°C (Example 3), 900°C (Example 4), 1000°C (Example 5), and 1100°C (Example 6), and 8 g of the composite powder was used for each Example.

In a water solvent, 2 g of each of the composite powders treated at the respective heating temperatures was disintegrated by using a ball mill. For the ball mill, a container (jar) and balls made of tungsten carbide (WC) were used. As the water solvent, 20 ml of ultra pure water was used. Disintegration at a number of revolutions of 600 rpm for 5 minutes and resting for 10 minutes were repeated. The disintegration was conducted for 7 hours in total.

A slurry obtained by the disintegration was centrifuged. The centrifugation was carried out at a temperature of 0°C and a centrifugal acceleration of 22000×g for 30 minutes.

TEM observation was conducted by using a supernatant obtained by the centrifugation. Table 1 shows the results.

**[Table 1]**

| Heating temperature (°C) | 600°C (Ex. 1) | 700°C (Ex. 2) | 800°C (Ex. 3) | 900°C (Ex. 4) | 1000°C (Ex. 5) | 1100°C (Ex. 6) |
|---|---|---|---|---|---|---|
| Average particle diameter (nm) | 2.2 | 2.1 | 2.1 | 2.1 | 2.1 | 1.9 |
| Standard deviation (nm) | 0.6 | 0.53 | 0.53 | 0.43 | 0.45 | 0.37 |

As shown in Table 1, the higher the heating temperature in the oxidizing atmosphere was, the smaller the standard deviation was. In other words, it can be understood that the higher the heating temperature, the narrower the particle size distribution of the silicon fine particles. Accordingly, it can be understood that the particle size distribution of silicon fine particles is narrower in a case where a composite powder is heated in an acidic atmosphere than in a case where the composite powder is not heated. In other words, it is revealed that silicon fine particles having a uniform particle diameter can be obtained by heating a composite powder in an acidic atmosphere.

Moreover, it was found that the higher the heating temperature in the oxidizing atmosphere was, the smaller the average particle diameter was. This reveals that the average particle diameter can be controlled by adjusting the heating temperature.

### (4) Operations and Effects

The method for producing silicon fine particles according to the present embodiment includes: a baking step of baking a mixture including a silicon source and a carbon source in an inert atmosphere; a rapid cooling step of rapidly cooling a gas generated by baking the mixture to obtain a composite powder including silicon fine particles and silicon oxide; a heating step of heating the composite powder in an oxidizing atmosphere; and a removing step of removing silicon monoxide and silicon dioxide from the heated composite powder. In this method, the surfaces of silicon fine particles included in the composite powder are oxidized to form silicon dioxide. Silicon fine particles having smaller particle diameters are more resistant to the formation of silicon dioxide. For this reason, surfaces of silicon fine particles having larger particle diameters are oxidized to silicon dioxide to greater extents, whereas surfaces of silicon fine particles having smaller particle diameters are not oxidized to silicon dioxide so much. Hence, silicon fine particles having a more uniform particle diameter than those achieved in conventional cases can be obtained. In other words, silicon fine particles having a smaller particle size distribution width can be obtained.

According to the method for producing silicon fine particles according to the present embodiment, the removing step includes the steps of: disintegrating the composite powder; and centrifuging the disintegrated composite powder. By the disintegration of the composite powder, the composite powder is disintegrated into the following composite powders. Specifically, one is a composite powder including silicon fine particles whose particle diameters are made uniform in Heating Step S3 and silicon dioxide formed on the surfaces of the silicon fine particles, and the other is a composite powder including silicon fine particles whose particle diameters are made uniform in Heating Step S3, silicon fine particles having particle diameter slightly larger than the uniform particle diameter, and silicon dioxide formed on the surfaces of the silicon fine particles. By centrifuging these composite powders, the composite powder including only the silicon fine particles having a uniform particle diameter can be obtained. Hence, silicon fine particles having a further uniform particle diameter can be obtained.

### (5) Other Embodiments

As described above, the present invention has been described by using the embodiment described above. However, it should not be understood that the description and drawings which constitute part of this disclosure limit the invention. From this disclosure, various alternative embodiments, examples, and operation techniques will be found by those skilled in the art. The present invention includes various embodiments not described herein.

For example, in Removing Step S4, after the composite powder was disintegrated, and the centrifugation was conducted, the silicon fine particles and the silicon oxide are separated from each other. However, the present invention is not limited to this. In the Removing Step S4, the silicon fine particles and the silicon oxide may be separated from each other by etching. Specifically, the composite powder heated in the acidic atmosphere in Step S3 is immersed in an etching solution containing hydrofluoric acid and an oxidizing agent. As a result, the silicon oxide is dissolved into the etching solution, leaving the silicon fine particles in the etching solution. The silicon fine particles can be obtained by filtering the etching solution in which the silicon fine particles are left.

In the present embodiment, the silicon fine particles are isolated in the Removing Step S4. However, the isolation is not necessarily required, and silicon fine particles covered with silicon dioxide may be obtained depending on the purpose.

The technical scope of the present invention should be determined only by the matters to define the invention in the scope of claims regarded as appropriate based on the description. Note that the entire content of Japanese Patent Application No. 2010-183768 (filed on August 19, 2010) is incorporated herein by reference.

### INDUSTRIAL APPLICABILITY

As described above, the method for producing silicon fine particles according to the present invention is capable of efficiently producing silicon fine particles having a more uniform particle diameter than those achieved in conventional cases. Hence, the method is useful in the field of production of silicon fine particles.

## Claims

1. A method for producing silicon fine particles, comprising:
a baking step of baking a mixture including a silicon source and a carbon source in an inert atmosphere;
a rapid cooling step of rapidly cooling a gas generated by baking the mixture to obtain a composite powder including silicon fine particles and silicon oxide;
a heating step of heating the composite powder in an oxidizing atmosphere; and
a removing step of removing silicon monoxide and silicon dioxide from the heated composite powder.

2. The method for producing silicon fine particles according to claim 1, wherein
the removing step includes the steps of:
disintegrating the composite powder; and
centrifuging the disintegrated composite powder.

3. The method for producing silicon fine particles according to claim 1 or 2, wherein
in the heating step, the heating of the composite powder in the oxidizing atmosphere is conducted after the composite powder is heated in an inert atmosphere.
